Europäisches Patentamt

European Patent Office

Office européen des brevets

(11) Publication number: **0 418 429 A1**

# EUROPEAN PATENT APPLICATION

(21) Application number: 89202334.2

(22) Date of filing: **18.09.89**

(51) Int. Cl.⁵: **B62J 1/06, B62J 1/08**

(43) Date of publication of application:
**27.03.91 Bulletin 91/13**

(84) Designated Contracting States:
**BE CH FR LI NL**

(71) Applicant: **PIAGGIO VEICOLI EUROPEI S.r.l.**
**Viale Rinaldo Piaggio 23**
**I-56025 Pontedera Pisa(IT)**

(72) Inventor: **Montano, Giacomo**
**Via Calzabigi 49**
**I-57125 Livorno(IT)**

(74) Representative: **De Carli, Erberto et al**
**ING. BARZANO' & ZANARDO MILANO S.p.A.**
**Via Borgonuovo, 10**
**I-20121 Milano(IT)**

(54) Saddle with elastic suspension device, for a two-wheeler.

(57) The saddle (2) comprises a pair of swinging arms (5, 6), each of which is hinged onto the framework (4) of the saddle and onto a support structure (3) integral with the vehicle; at least one (5) of both above said arms is mechanically connected with elastic means (8) so as to deform these latter during the oscillation of the arms, in order to generate an elastic reaction force suitable for counteracting the forces applied to the saddle.

Fig. 1

Xerox Copy Centre

EP 0 418 429 A1

## SADDLE WITH ELASTIC SUSPENSION DEVICE, FOR A TWO-WHEELER

The present invention relates to an elastic suspension device for the saddle of a two-wheeler, by means of which the attitude of the same saddle is maintained substantially constant over the whole oscillation stroke the said saddle can undergo.

The suspension devices of this type, destined to the single-seat saddles for two-wheelers equipped with an engine, comprise mechanisms provided with elastic means which enable the saddle to undergo determined movements, and generate elastic reactions suitable for counteracting the forcesa applied to the same saddle during the traveling of the vehicle, in order to ensure a high level of functionality and comfort.

The above said devices do not enable the saddle to undergo movements with its attitude remaining constant, i.e., movements during which the longitudinal axis of the same saddle is kept substantially parallel to itself, but the saddle can only undergo movements during which also rotations of the same saddle around a horizontal axis take place. In fact, the hereinabove cited mechanisms have a horizontal-axis hinge around which the saddle rotates while it is simultaneously shifting on the vertical plane, under the action of the weight of the passenger. The above said rotation causes an undesired change in attitude which alters the driving position of the driver relatively to the vehicle, and considerably limits the amplitude of the shifts of the saddle and, consequently, the comfort which can be obtained during the traveling.

The purpose of the present invention is of providing a device of the above cited type, which is free from the hereinabove described drawbacks and therefore enables the saddle to keep a constant attitude, whichever the relative position of this latter is, as referred to the vehicle, during the oscillation of the same saddle.

Such a purpose is obtained by means of a saddle with an elastic suspension device for a two-wheeler, characterized in that it comprises a pair of swinging arms, each of which is hinged onto a framework of the saddle and onto a support structure integral with the vehicle, with at least one of above said arms being mechanically connected with elastic means so as to deform said elastic means during the oscillation of said arms, in order to generate an elastic reaction force suitable for counteracting the forces applied to the saddle.

For a better understanding of the finding according to the present invention a disclosure in greater detail thereof is now given with reference to the hereto attached drawings, in which:

Figure 1 shows a partially sectional side view of the saddle with the relevant elastic suspension device;

Figure 2 shows some charts suitable for illustrating the operating characteristics of the elastic means used in the above said device;

Figure 3 shows a schematic side view of a two-wheeler on which the saddle of the present invention is installed.

The elastic suspension device, generally indicated by the reference numeral 1, is suitable for elastically supporting a saddle 2 and in its turn is connected with a support structure indicated by the reference numeral 3 and rigidly fastened onto a tubular element 4 of the framework of the vehicle.

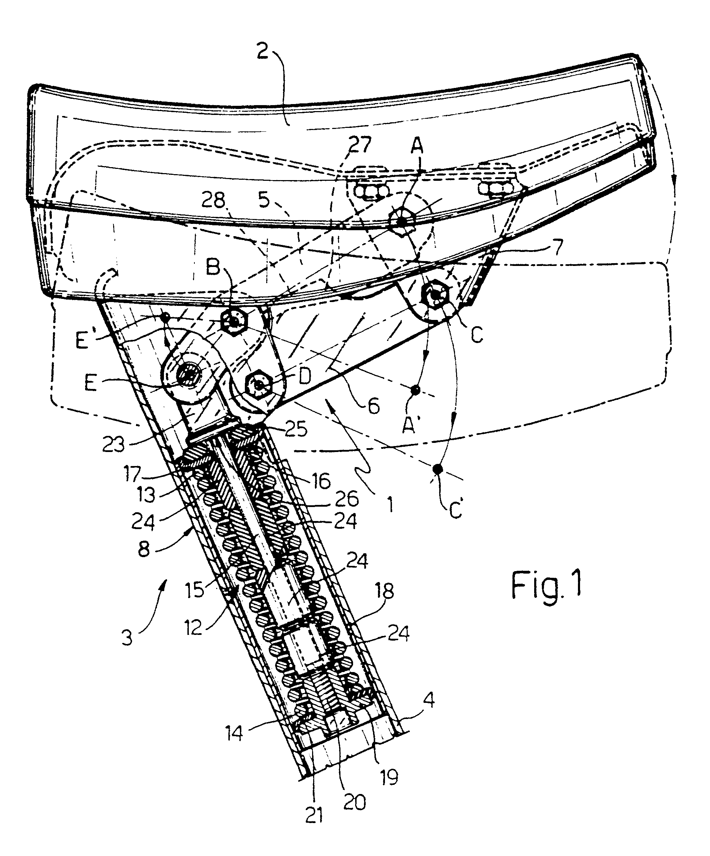

The device substantially comprises a pair of swinging arms 5 and 6, each of which is hinged onto a framework 7 of the saddle and onto the above said support structure; the trace of the hinging axes of the above said arms is indicated with "A", "B", "C" and "D" in Figure 1. Advantageously, as one can see from the figure, the position of said points is so selected as to substantially define the vertices of a parallelogram. At least one of arms 5 and 6 is mechanically linked with elastic means, generally indicated by the numeral 8, in such a way that said elastic means are deformed during the oscillation of the same arms in order to generate, in the way which is disclosed in the following, an elastic reaction force suitable for counteracting the forces applied to the saddle 2.

The elastic means 8 comprise at least one helical spring 12, a first end 13 of which is connected with the support structure 3, and the other end 14 of which is connected with a rod 15, which is positioned inside the interior of the above said spring and is coaxial with it. The first end 13 rests against a seat 16 provided on a disk 17 fastened, in any advantageous way, to a tubular shell 18 inside which the elastic means 8 are housed.

The other end 14 of the spring rests against a stop organ 19 fastened onto the lower end 20 of the rod 15; advantageously, such a stop organ is equipped with an axial, threaded bore suitable for getting screwed down on the corresponding threaded end 20 of the above said rod. Between said stop organ and said spring end 14 a ring 21 is preferably installed, whose outer edge is widely radiused.

The upper end of the rod 15 is provided with a head 23 hinged onto the arm 5 in a point "E" which, relatively to the point "B" in which said arm is hinged onto the support structure 3, is on the side opposite to the side on which the point "A" in which the same arm is hinged onto the framework 7 of the saddle is.

The elastic means 8 furthermore comprise pads of tubular shape 24 made from a deformable material, having an elasticity of elastomeric type, so positioned as to be deformed together with the helical spring 12 and therefore inside it and coaxial with the rod 15. One of said pads rests against the seat 16 of the support structure 3, and another pad rests against the stop organ 19. Between the head 23 and the disk 17 a ring of a deformable material 25 is provided, eg., a rubber ring, against which an annular shoulder 26 of the above said head rests.

One of the two arms 5 and 6, advantageously the arm 6, has a central portion 27 protruding towards the other arm, and which arranges itself on one side relatively to this latter: therefore, as one can clearly see from Figure 1, a portion 28 of the arm 5 results in such a figure to be overlapped to the portion 27 of the other arm.

The operating way of the hereinabove disclosed device is as follows.

In the rest position, when the weight of the driver of the vehicle is not acting on the saddle, the various organs of the device are in the configuration as shown in Figure 1: in said configuration, the spring 12 and the pads 24 are subject to a slight compression pre-load, the value of which can be varied by suitably adjusting the position of the stop organ 19 relatively to the end 20 of the rod 15. In the same configuration, the shoulder 26 of the head 23 rests on the ring 25.

When the driver's weight acts on the saddle 1, said weight is transmitted through the "A"-axis pivot to the arm 5 which rotates around the "B"-axis pivot in clockwise direction in Figure 1, causing the pivot "E", and hence the stop organ 19, to shift upwards and therefore the compression of the spring 12 and of the pads 24 to increase: during the rotation of the arm 5, the torque of the elastic reaction acting on the same arm and which is generated by the elastic means 8 is equilibrated by the torque generated by the weight of the driver. It results evident that in the so-obtained configurations a shift of the saddle 2 takes place, which can be substantially assimilated to a rigid downwards translation of the same saddle: such a shift is in fact imposed by the constraints accomplished by means of the two swinging arms 5 and 6 which accomplish, in cooperation with the other parts of the device, a true articulated parallelogram. Therefore during the vehicle traveling, owing to the dynamic loads applied to the saddle 2, the device according to the present invention is arranged according to different configurations, to which different deformations of the elastic means 8 correspond; in particular in Figure 1 the configuration of maximum deformation is shown in chain; in said configuration corresponding to the maximum deormation the points "A", "C" and "E" respectively reach the points "A$'$", "C$'$" and "E$'$": as one can see from such a configuration, the attitude of the saddle is substantially the same in which the saddle is in its rest position; therefore, also in its other intermediate positions, and in its stroke-end positions, the saddle keeps its own attitude substantially unchanged and the driver only undergoes shifts in the vertical plane, which cannot have a negative impact on the drive conditions, and obviously ensure a high traveling comfort.

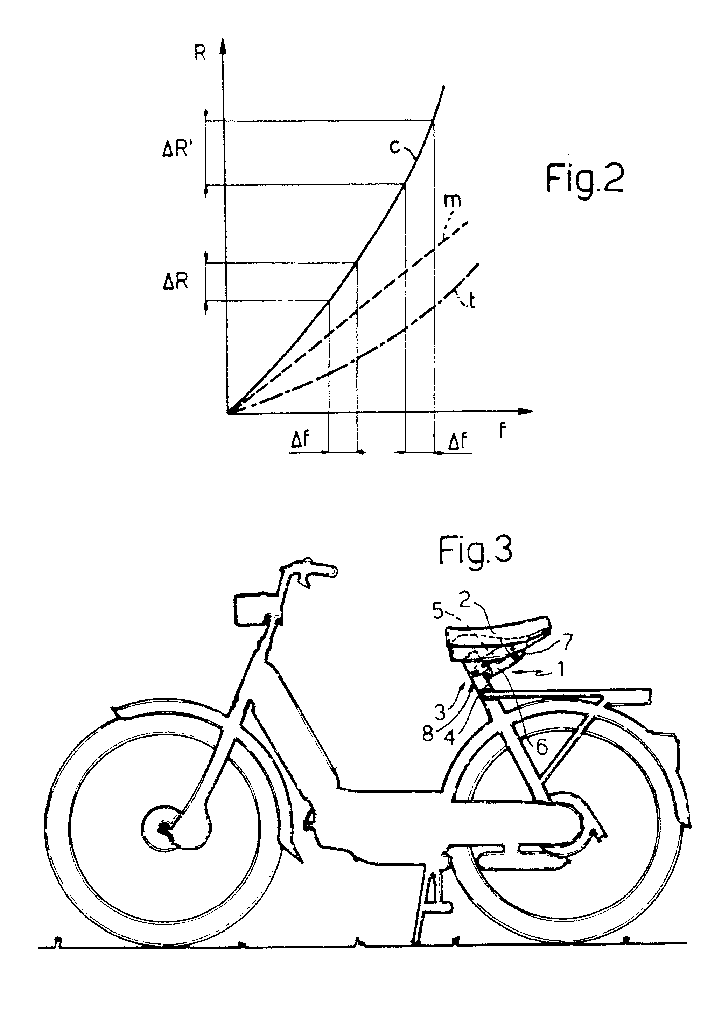

The characteristic of the elastic means used in the device according to the present invention has a non-linear trend, and is of the type as represented by the curve "c" in Figure 2. Such a characteristic represents, as known, the behaviour of the elastic reaction "R" generated by the elastic system (the spring 12 and the pads 24) as a function of the compression strain "f" of the system and hence also, with good approximation, as a function of the vertical shift of the saddle 2. In fact, such a characteristic is the sum of the linear characteristics "m" of the spring 12, and of the characteristic "t" of the whole of the pads 24: as known, the characteristic of elastic elements made from an elastomeric material and operating under compression shows an increasing stiffness with increasing deformation.

Therefore, the overall characteristic of the system, which is obtained as the sum of both said characteristics, shows also increasing values of stiffness $dR/df$ with increasing values of deformation "f". With such a characteristic to a same increase $\Delta f$ in strain "f" different increases $\Delta R$ and $\Delta R'$ correspond in elastic reaction with an higher increase being obtained at higher values of the same strain. This favourable characteristic makes it possible the saddle shifts to be limited as deformations increase, with a good traveling comfort being anyway maintained, and simultaneously considerably limits the amplitude of the oscillations of the elastic means; furthermore, the pads 24, which are made from an elastomeric material, are capable of considerably damping said oscillations.

The purpose of the ring 25 of deformable material is of reducing the impact energy owned by the head 23 when the rod 15 reaches its lower stroke-end position, in case of oscillations of very wide amplitude and in case the load acting on the elastic means is removed.

Finally the ring 21 which, as said, has a rounded peripheral edge, enables the stop organ 19 to axially shift inside the interior of the shell 18 and it to simultaneously undergo small-extent rotations as imposed by the rotation of the pivot "E" around the axis of the pivot "B" during the oscillations of arms 5 and 6.

The presence of the central portion 27 of the arm 6 prevents a gap between the arms 5 and 6 inside which the driver may slide his hand fingers from being generated during the oscillation of the same arms.

It results hence evident that the elastic suspension device according to the present invention maintains substantially unchanged the attitude of the saddle, and hence the driving position of the vehicle driver, offers a high traveling comfort, limits the excessively high oscillation amplitudes and exerts a considerable damping effect on the same oscillations.

To the shape and to the arrangement of the various parts which compose the hereinabove disclosed device, modifications and variants may be supplied without departing from the scope of the invention. In particular, the elastic means 8 can be accomplished in a different way from as disclosed and may comprise, e.g., springs and pads of deformable material having shapes and arrangements different to as hereinabove illustrated; and furthermore, also the linking of the elastic means to either of both swinging arms 5 and 6 can be accomplished differently from as disclosed: in particular, a different hinging axis ("E" axis) can be selected in order to link the head 23 with either of arm 5 or arm 6.

## Claims

1. Saddle (2) with an elastic suspension device (1) for a two-wheeler, characterized in that it comprises a pair of swinging arms (5, 6), each of which is hinged onto a framework (7) of the saddle and onto a support structure (3) integral with the vehicle, with at least one (5) of both above said arms being mechanically connected with elastic means (8) so that said elastic means are deformed during the oscillation of said arms, in order to generate an elastic reaction force suitable for counteracting the forces applied to the saddle.

2. Saddle according to claim 1, characterized in that said elastic means (8) comprise at least one helical spring (12), a first end of which (13) is linked with said support structure (3) and a second end (14) of which is linked with a rod (15) which is positioned inside the interior of said spring and is hinged onto one (5) of said swinging arms.

3. Saddle according to claim 2, characterized in that said first end (13) of said helical ring rests against a seat (16) of said support structure (3) and said second end (14) rests on a stop organ (19) connected with a first end (20) of said rod, with the other end of said rod being hinged onto one of said arms in a point (E) which, relatively to the point (B) in which the same arm is hinged onto said support structure, in on the side opposite to the side on which the (A) point in which said arm is hinged onto the framework (7) of the saddle is.

4. Saddle according to claim 3, characterized in that the position of said stop organ (19) can be adjusted relatively to said first end (20) of said rod (15).

5. Saddle according to one of the preceding claims, characterized in that said elastic means (8) comprise pads (24) made from a deformable material having an elasticity of elastomeric type, so positioned as to get deformed together with said helical spring.

6. Saddle according to one of the preceding claims, characterized in that said pads (24) are of tubular shape and are positioned inside said spring (12) and outside said rod (15) and are coaxial with them, with at least one of them resting against said seat (16) of the support structure and at least another one of them resting against said stop organ (19).

7. Saddle according to one of the preceding claims, characterized in that it comprises a shell (18) of tubular shape fastened onto said support structure of the vehicle and inside which said spring, said pads and said rod are housed, with said shell comprising an upper disk (17) in which said seat (16) for said spring (12) is provided, and through which said rod (15) passes, with said rod comprising a head (23) which is hinged onto one of said swinging arms ( 5) and is provided with a shoulder (26) suitable for resting, in the rest configuration of the device, against a ring of deformable material (25) interposed between said disk (17) and said shoulder (26).

8. Saddle according to one of the preceding claims, characterized in that both said swinging arms are hinged onto said framework of said saddle and onto said support structure in points ("A", "B", "C", "D") which substantially define the vertices of a parallelogram.

9. Saddle according to claim 8, characterized in that said swinging arms are arranged on two mutually parallel planes, with one of said arms having a central portion (27) protruding towards the other arm, and which central portion arranges itself on a side relatively to said arm.

Fig.1

Fig.2

Fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DK-A-19862 (CARL JOHNSON)<br>* figure 1 * | 1-4, 8 | B62J1/06<br>B62J1/08 |
| X | FR-A-2491425 (HURET)<br>* page 6, lines 20 - 33; figure 5 * | 1, 2, 8 | |
| A | FR-A-1452133 (GONZALES)<br>* the whole document * | 1 | |
| A | FR-A-1353452 (GREGOIRE)<br>* the whole document * | 1 | |

TECHNICAL FIELDS SEARCHED (Int. Cl.5 )

B62J

The present search report has been drawn up for all claims

| Place of search | Date of completion of the search | Examiner |
|---|---|---|
| THE HAGUE | 27 APRIL 1990 | VANNESTE M.A.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)